# EUROPEAN PATENT SPECIFICATION

(11) **EP 1 946 953 B1**
(45) Date of publication and mention of the grant of the patent: **23.09.2009**
(21) Application number: 08000624.0
(22) Date of filing: 15.01.2008
(51) Int. Cl.: B60K 7/00, B60K 17/30, B60B 11/02

(54) **Improved wheel set assembly**
Verbesserte Reifensatzanordnung
Assemblage d'ensemble de roue amélioré

(30) Priority: 19.01.2007 ES 200700154
(43) Date of publication of application: 23.07.2008
(73) Proprietor: Moreno Pujal, S. L., 25280 Solsona (Lleida) (ES)
(72) Inventor: Moreno Pujal, Joan, 25280 Solsona (Lleida) (ES)
(74) Representative: Isern-Jara, Nuria

(56) References cited:
- AU-B2- 416 302
- DE-A1- 1 755 126
- US-A- 2 357 343

## Description

### DESCRIPTION

### OBJECT OF THE INVENTION

The object of this present Invention patent is an improved wheel set assembly that incorporates appreciable innovations and advantages in relation to other vehicles with the same purpose.

More specifically, the invention refers to an improved wheel set assembly, particularly for the movement of transport vehicles and other similar for heavy loads, with a considerable size that is characterised by its robustness and reliability.

### BACKGROUND TO THE INVENTION

The existence of autonomous vehicles for the movement of large loads has been known for some years, such as those which are used inside industrial enclosures for the automated movement of large sized dies. This type of vehicles are usually made up of a horizontal platform onto which the large load to be moved is placed and with a means of movement made up of several sets of wheels that are required for the handling of large loads as known from DE1755126.

These sets of wheels are made up of means of activation that allow the movement of the wheels, however, said activation devices occupy considerable space hence they are exposed to knocks and dirt, in such a way that it involves the carrying out of higher maintenance for the sets of wheels. In addition, another disadvantage is centred around the moment of carrying out a turn of the autonomous vehicle in relation to the vertical axis as it requires the use of additional devices to allow the turn of the vehicle which, in certain cases, consists of the use of pistons or similar elements that slightly raise the autonomous vehicle to make the subsequent turn of the stated vehicle in the air. Otherwise, the not having said additional devices available would mean that the known wheel assemblies will not allow the vehicle to make sharp changes of direction.

### DESCRIPTION OF THE INVENTION

The present invention has been developed for the purpose of providing a wheel set assembly that solves the previously stated disadvantages, moreover, providing other additional advantages that will be clear from the description which is attached below.

It is therefore the aim of the invention to provide an wheel set assembly according to claim 1, particularly for the movement of transport vehicles and similar for heavy loads, whereby it has a fork or cradle to turn the platform through an angle in relation to the vertical axis, two independent internally hollow motorised wheels located on the same central horizontal axis and separated by a certain distance, which are supported by an internally hollow support, an activating motor connected to said fork or cradle, and that it is fitted with an internal reduction mechanism and an internal differential mechanism so that under the conditions of the vehicle making a change of trajectory, one of the motorised wheels has the ability to turn at a different speed to the other motorised wheel both wheels maintaining the same torque, said internal reduction mechanism and internal differential mechanism being housed in the cavity formed on the inside of the support of the two motorised wheels.

According to another aspect of the invention, the internal reduction mechanism of the wheel assembly has three planetary gear assembly systems, two of said planetary systems being respectively coupled to each one of the motorised wheels, and the third planetary system being coupled to the differential mechanism.

By preference, the said third system is linked to a longitudinal axis coupled to the activation motor whose task is to transmit the movement to the rest of the elements of the mobile components.

In regard to the differential mechanism, this is made up of at least two conical crowns, so that one of the crowns is connected to one of the planetary systems coupled to a wheel, whilst the other conical crown is connected to the other planetary system coupled to the other wheel.

Advantageously, the fork or cradle as some means of water tightness that prevents the entry of dirt and leaks of the lubricant for the greasing of the internal mechanical components, for example, double lip gaskets.

Thanks to these characteristics, an autonomous vehicle is obtained for the transporting of heavy loads whose wheel sets are compact (this means, the working mechanisms are arranged on the inside) and are modular, having a considerably reduced manufacturing cost and which allow controlled movements to be carried out and without any lack of continuity in any direction on the plane (cross movements, movements at an angle, pivoting on differing predetermined centres) without the need to unload the elements being transported and without excess effort or the help of additional elements. In addition, and advantageously the internal space of the wheel is watertight and allows the greasing of the differing mechanisms housed without the possibility of lubricant leaks.

Advantageously, the three planetary systems of gears and the differential mechanism are aligned on the same longitudinal axis.

Additionally, under the condition of a change of trajectory of the vehicle, the two motorised wheels have the capacity to turn simultaneously in opposing directions when all of the assembly pivots on its vertical axis.

Other characteristics and advantages of the wheel assembly object of this present invention will become clear from a description of a preferred embodiment, but it is not exclusive, the drawings that are attached are by way of illustration but without being in any way limiting.

### BRIEF DESCRIPTION OF THE DRAWINGS

Figure 1 shows a perspective view of an autonomous vehicle for the transportation of heavy loads that incorporates the wheel set assembly according to the present invention.
Figure 2 shows a transversal section of the wheel assembly of the vehicle of the invention.
Figure 3 shows a transversal section of the above wheel assembly of the vehicle in a larger scale and in which several parts have been removed to give greater understanding.
Figure 4 shows a detail in an increased scale of a portion of the transversal section of the above figure; and
Figure 5 shows a plan view from above the wheel set assembly.

### DESCRIPTION OF A PREFERRED EMBODIMENT

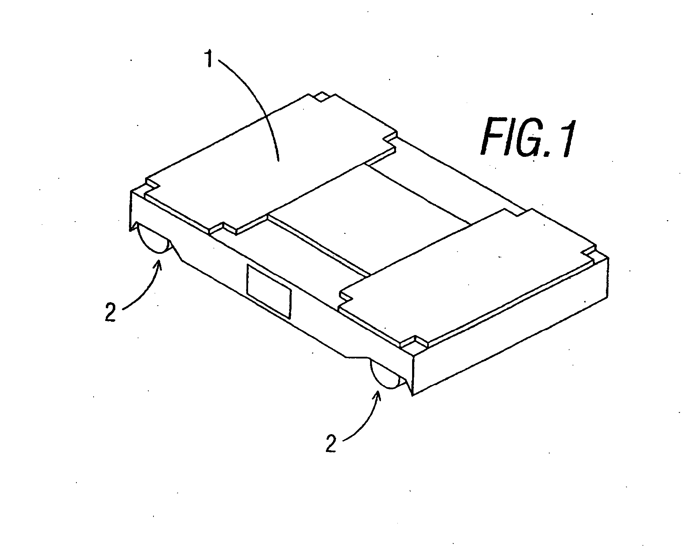

In figure 1 an embodiment is shown of an autonomous vehicle for the transport of heavy loads, such as mould, dies, etc., that is made up of a platform (1) that is appreciably horizontal that supports the load to be transported and a means of movement that consists of four wheel set assemblies corresponding with the aim of the invention, referenced in a general nature with the number (2) located at each corner of the platform (1), which are detailed below.

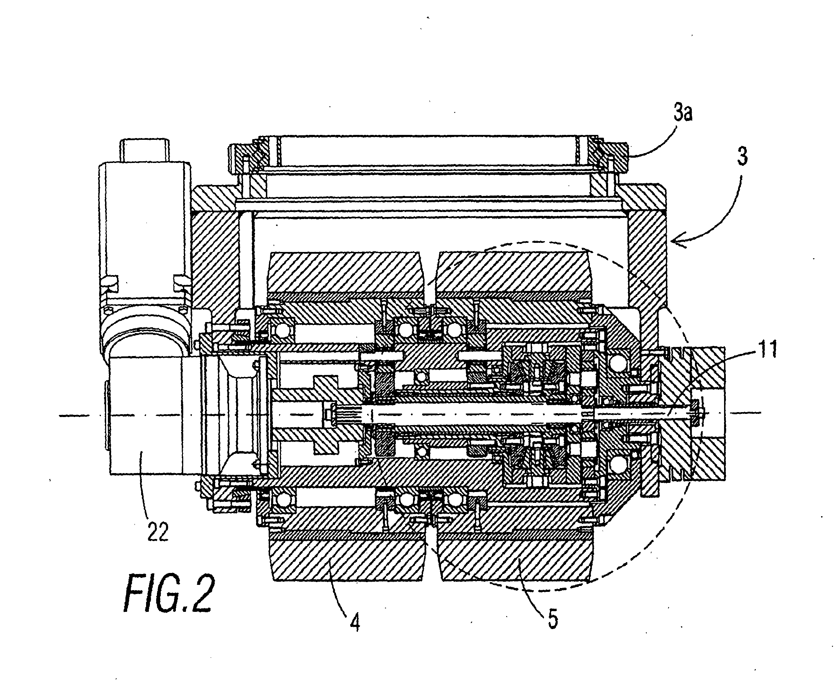

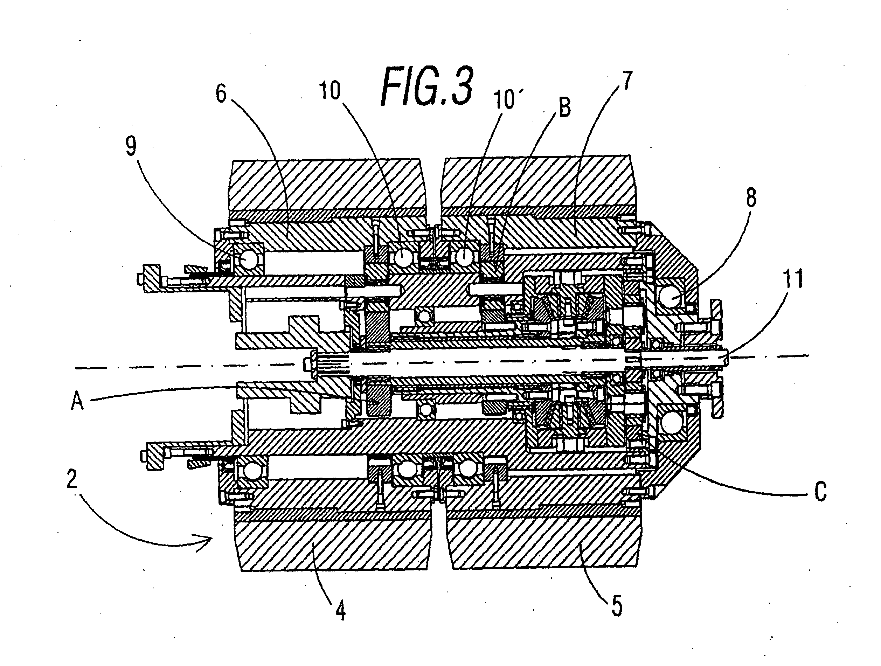

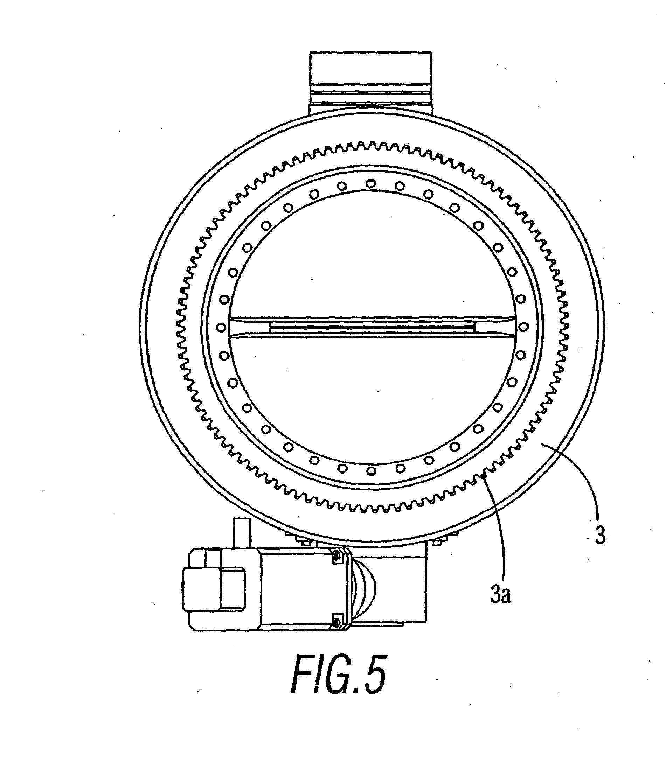

As can be seen in figures 2, 3 and 4, each wheel assembly (2) is made up of an upper fork or cradle (3) that allows the angular turning of the platform in relation to its vertical axis, two internally hollow independent motorised wheels (4 & 5) located on the same central horizontal axis and separated by a certain distance which are supported by supports (6 & 7) or internally hollow rims that include the corresponding bearings (8, 9, 10 & 10'). In addition an activation motor (22) is fitted (being able to be of a hydraulic or pneumatic type, or any other suitable type) connected to the stated fork or cradle (3), and which is provided with an internal reduction mechanism and an internal differential mechanism (D) so that under the conditions of a change of vehicle trajectory, one of the motorised wheels (4 & 5) turns in an opposite direction and at a different speed to the other motorised wheel (the torque of both wheels being the same), said internal reduction mechanism and said internal differential mechanism being housed in the cavity formed on the inside of the supports (6 & 7) of the two motorised wheels (4 & 5). The fork or cradle (3) includes a section (3a) in the upper part by way of being a toothed crown (see figure 5) in order to be coupled to a gear (not shown) connected to a platform (1) to allow the operation of a turn in relation to the vertical axis.

Each one of the motorised wheels (4 & 5) is fitted with a solid polyurethane tread.

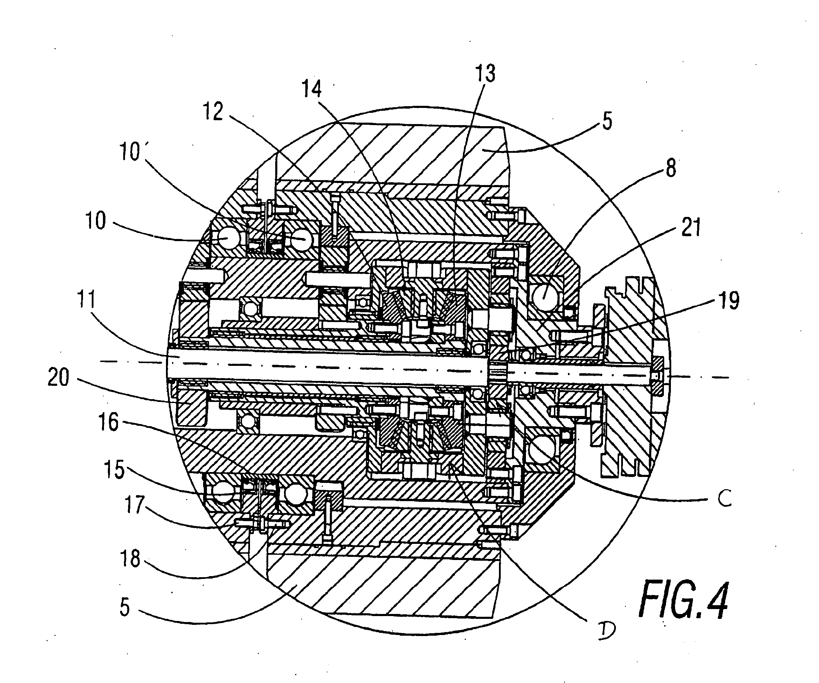

The internal reduction mechanism has three planetary systems of gears (A, B & C), two of said planetary systems (A & B) being coupled to each one of the motorised wheels (4 & 5) respectively, and the third planetary system (C) being coupled to the internal differential mechanism (D) as can be seen more clearly in figure 4. Said third planetary system (C) is linked to a longitudinal axis (11) that is connected to the activation motor. Each one of the stated planetary system (A, B & C) is made up of an external toothed crown, a central solar gear and two satellite gears.

In regard to the internal differential mechanism (D), and as can be seen more clearly in figure 4, it is basically made up of two conical crowns (12 & 13) and a central satellite differential gear (14), so that when they engage, one of the crown (12) transmits the movement to one of the planetary systems coupled to one wheel, whilst the other conical crown (13) transmits the movement to the other planetary system coupled to the other wheel. Greater detail in regard to the working of said internal differential mechanism (D) is not going to be gone into as it is the same working concept as any other differential concept known in the state of the art. This internal differential mechanism (D) distributes the torque between both wheels (4 & 5) and allows its opposing turn to be made with complete freedoms when all of the system pivots on the vertical axis.

Additionally and to prevent leaks of the lubricant from the inside of the wheel assembly some means of water tightness is provided. Such means of water tightness are made up by gaskets of the double lip type and O-ring seals (15 & 16) that are located on the periphery in the space between the two wheels (4 & 5) and at the opposite ends, which are held onto the supports (6 & 7) by their respective bolts (17 & 18) in such a way that the inside of the wheel assembly (2) is completely water tight and leak proof.

It must also be mentioned that the assembly (2) of the invention internally has a support element (21) simultaneously holding the turning gears of both wheels and the fork or cradle (3), acting as a main support axle and gearbox (see figure 4).

Next, the working of one of the wheel assemblies is going to be detailed according to the invention:

In the first place, when the activation motor is activated it makes the longitudinal axis (11) turn in such a way that its transfers the movement to the planetary system of the gears (C) by means of the central solar gear (19). Said planetary system (C) transfers its turning movement to the internal differential mechanism (D) making the differential satellite gear (14) turn and in turn engaging with the two conical crowns (12 & 13). Next, the conical crown (12) transfers its movement to the planetary system (B) making it turn the wheel (5) support (7) whilst on the other hand, the conical crown (13) transfers its movement to the planetary system (A) making the support or rim (6) of the wheel (4) turn by means of the central solar gearing (20). In the case of a straight line movement of the independent vehicle (either backwards or forwards),the turn torque of the conical crowns (12 & 13) is equal to zero whilst in a situation where there is a change of direction of the vehicle, owing to the fact that both wheels must turn, each wheel has a different tangential velocity, it thus being necessary to have an internal differential mechanism (D) to counteract this difference and so that each wheel keeps the torque, in such a way that it can turn against its vertical axis.

The details, shapes, sizes and other accessorial elements, likewise the materials used in the manufacture of the wheel set assembly of the invention can be appropriately substituted by others that are technically equivalent and do not stray away from the essentiality of the invention or the scope defined by the claims that are included below.

## Claims

1. An wheel set assembly (2) specially for transport vehicles and similar for heavy loads, each wheel assembly (2) is made up of
a fork or cradle (3) to make an angular turn of a platform in relation to its vertical axis, two internally hollow independent motorised wheels (4 & 5) located on the same central horizontal axis and separated by a certain distance, which are supported by internally hollow supports
an activation motor (22) that is fitted to the stated fork or cradle (3), and
which is provided with an internal reduction mechanism (A, B, C) driven by said activation motor (22), the internal reduction mechanism (C) transferring movement to an internal differential mechanism (D) which transfers movement to the internal reduction mechanism (A,B) transferring movement to the wheels while the motor is fitted to the fork (3), so that under the conditions of a change of vehicle trajectory, one of the motorised wheels is able to turn at a different speed to the other motorised wheel with both wheels still being able to maintain the same torque; and **characterised in that**
said internal reduction mechanism and said internal differential mechanism (D) being housed in a cavity formed on the inside of the supports (6,7) of the two motorised wheels (4 & 5).

2. A wheel set assembly (2) according to claim 1, **characterised in that** the internal reduction mechanism has three planetary gearing systems (A, B & C), two of said planetary systems (A & B) being respectively coupled to each one of the motorised wheels, and the third planetary system (C) being coupled to the internal differential mechanism (D).

3. A wheel set assembly (2) according to claim 2, **characterised in that** the third planetary system (C) is linked to a longitudinal axis connected to the activation motor (22).

4. A wheel set assembly (2) according to claims 1 & 2, **characterised in that** the internal differential mechanism (D) is made up of at least two conical crowns (12 & 13) and differential satellite gearing (14) so that one of the crowns (12) is connected to one of the planetary systems connected to a wheel, whilst the other conical crown (13) is connected to the other planetary system coupled to the other wheel.

5. A wheel set assembly (2) according to claim 1, **characterised in that** the fork or cradle is fitted with some means of water tightness.

6. A wheel set assembly (2) according to claim 5, **characterised in that** the stated means of water tightness has a plurality of gaskets being of the double lip type and also O-ring seals (15 & 16).

7. A wheel set assembly (2) according to claim 1, **characterised in that** fork or cradle (3) has a toothed crown section (3a) on its upper part so as to engage with a gear so as to enable the turning movement to its vertical axis.

8. A wheel set assembly (2) according to any of the above claims, **characterised in that** the three planetary gearing systems (A, B & C) and the internal differential mechanism (D) are aligned on the same longitudinal axis.

9. A wheel set assembly (2) according to claim 1, **characterised in that** in a situation of a change of direction of the vehicle, the two motorised wheels (4 & 5) have the ability to simultaneously turn in opposite directions when the whole assembly is pivoting on its vertical axis.

## Patentansprüche

1. Radsatzsystem (2), insbesondere zur Fortbewegung eines Transportfahrzeugs für schwere Lasten und Ähnliches, der Radsatzsystem (2) bestehend aus:
einer Gabel (3) zum Drehen der Plattform um eine vertikale Achse, zwei voneinander unabhängigen, innen hohlen Antriebsrädern (4, 5), die in einem bestimmten Abstand voneinander auf ein und derselben horizontalen Mittelachse liegen und von innen hohlen Trägern getragen werden,
einem mit der genannten Gabel (3) verbundenen Antriebsmotor (22) und
wobei ein von diesem Antriebsmotor (22) angetriebenes, internes Reduktionsgetriebe (A, B, C) vorgesehen ist, wobei das interne Reduktionsgetriebe (C) die Bewegung auf ein internes Differentialgetriebe (D) überträgt, welches die Bewegung auf das interne Reduktionsgetriebe (A, B) überträgt, welches die Bewegung auf die Räder überträgt, während der Motor mit der Gabel (3) verbunden ist, so dass bei einer Änderung der Fahrtstrecke des Fahrzeugs, eines seiner Antriebsräder in der Lage ist, sich mit einer gegenüber dem anderen Antriebsrad unterschiedlichen Geschwindigkeit zu drehen, wobei in beiden Antriebsrädern das gleiche Antriebsmoment beibehalten wird,
**dadurch gekennzeichnet, dass** dieses interne Reduktionsgetriebe und dieses interne Differentialgetriebe (D) in einer im Inneren der Träger (6, 7) der beiden Antriebsräder (4, 5) gebildeten Aushöhlung untergebracht sind.

2. Radsatzsystem (2) nach Anspruch 1, **dadurch gekennzeichnet, dass** das interne Reduktionsgetriebe drei Planetengetriebe (A, B, C) umfasst, wobei zwei dieser Planetengetriebe (A, B) mit je einem Antriebsrad verbunden sind und das dritte Planetengetriebe (C) mit dem internen Differentialgetriebe (D) verbunden ist.

3. Radsatzsystem (2) nach Anspruch 2, **dadurch gekennzeichnet dass** das dritte Planetengetriebe (C) mit einer mit dem Antriebsmotor (22) verbundenen Längsachse verbunden ist.

4. Radsatzsystem (2) nach einem der Ansprüche 1 oder 2, **dadurch gekennzeichnet, dass** das interne Differentialgetriebe (D) aus wenigstens zwei konischen Radkränzen (12, 13) und einem Differential-Satellitengetriebe (14) besteht, so dass einer der Radkränze (12) mit dem mit dem einen Rad verbundenen Planetengetriebe in Verbindung steht, während der andere konische Radkranz (13) mit dem anderen mit dem anderen Rad verbundenen Planetengetriebe in Verbindung steht.

5. Radsatzsystem (2) nach Anspruch 1, **dadurch gekennzeichnet, dass** die Gabel über Dichtungsmittel verfügt.

6. Radsatzsystem (2) nach Anspruch 5, **dadurch gekennzeichnet, dass** die genannten Dichtungsmittel aus einer Vielzahl von Doppeldichtungslippen und O-Ring-Dichtungen (15, 16) bestehen.

7. Radsatzsystem (2) nach Anspruch 1, **dadurch gekennzeichnet, dass** die Gabel (3) im oberen Teil einen Abschnitt (3a) in Form eines Zahnkranzes zum Eingreifen in ein Räderwerk umfasst, um die Drehbewegung gegenüber der vertikalen Achse zu ermöglichen.

8. Radsatzsystem (2) nach einem der vorhergehenden Ansprüche, **dadurch gekennzeichnet, dass** die drei Planetengetriebe (A, B, C) und das interne Differentialgetriebe (D) auf ein und derselben Längsachse angeordnet sind.

9. Radsatzsystem (2) nach Anspruch 1, **dadurch gekennzeichnet, dass** bei einer Änderung der Fahrtstrecke des Fahrzeugs, die beiden Antriebsräder (4, 5) in der Lage sind gleichzeitig in entgegengesetzte Richtungen zu drehen, wenn das ganze System einen Schwenk um seine vertikale Achse vornimmt.

## Revendications

1. Ensemble de groupe de roue (2), en particulier pour le déplacement de véhicules de transport d'objets lourds et similaires, dont le groupe de roue (2) comprend :
une fourche (3) pour faire tourner en angle la plateforme par rapport à un axe vertical, deux roues motrices indépendantes (4, 5) intérieurement creuses situées sur un même axe central horizontal et séparées à une certaine distance, lesquelles sont supportées par des supports intérieurement creux,
un moteur d'entraînement (22) uni à ladite fourche (3), et
muni d'un mécanisme réducteur interne (A, B, C) actionné par ledit moteur d'entraînement (22), le mécanisme réducteur interne (C) transférant le mouvement à un mécanisme différentiel interne (D) qui transfère le mouvement au mécanisme réducteur interne (A, B) en transférant le mouvement aux roues tandis que le moteur est uni à la fourche (3), de telle manière que, dans une situation de changement de trajectoire du véhicule, l'une des roues motrices a la capacité de tourner à une vitesse différente par rapport à l'autre roue motrice, le même couple moteur étant maintenu par les deux roues motrices ; et **caractérisé en ce que** ledit mécanisme réducteur interne et ledit mécanisme différentiel interne (D) sont logés dans une cavité formée à l'intérieur des supports (6, 7) des deux roues motrices (4, 5).

2. Ensemble de groupe de roue (2) selon la revendication 1, **caractérisé en ce que** le mécanisme réducteur interne comprend trois systèmes planétaires à engrenages (A, B, C), deux desdits systèmes planétaires étant (A, B) assemblés à chacune des roues motrices respectivement, et le troisième système planétaire (C) étant accouplé au mécanisme différentiel interne (D).

3. Ensemble de groupe de roue (2) selon la revendication 2, **caractérisé en ce que** ledit troisième système planétaire (C) est uni à un axe longitudinal assemblé au moteur d'entraînement (22).

4. Ensemble de groupe de roue (2) selon l'une des revendications 1 et 2**, caractérisé en ce que** le mécanisme différentiel interne (D) est formé au moins de deux couronnes coniques (12, 13) et un engrenage satellite différentiel (14), de telle manière que l'une des couronnes (12) est associée à l'un des systèmes planétaires assemblé à une roue, tandis que l'autre couronne conique (13) est associée à l'autre système planétaire assemblé à l'autre roue.

5. Ensemble de groupe de roue (2) selon la revendication 1, **caractérisé en ce que** la fourche dispose de moyens d'étanchéité.

6. Ensemble de groupe de roue (2) selon la revendication 5, **caractérisé en ce que** lesdits moyens d'étanchéité comprennent une pluralité de joints du type à double lèvre et de joints toriques (15, 16).

7. Ensemble de groupe de roue (2) selon la revendication 1, **caractérisé en ce que** la fourche (3) inclue dans la partie supérieure un tronçon (3a) en guise de couronne dentée destinée à être assemblée à un engrenage afin de permettre le mouvement giratoire par rapport à l'axe.

8. Ensemble de groupe de roue (2) selon l'une des revendications précédentes, **caractérisé en ce que** les trois systèmes planétaires à engrenages (A, B, C) et le mécanisme différentiel interne (D) sont alignés sur un même axe longitudinal.

9. Ensemble de groupe de roue (2) selon la revendication 1, **caractérisé en ce que,** dans une situation de changement de trajectoire du véhicule, les deux roues motrices (4, 5) ont la capacité de tourner simultanément dans des sens opposés lorsque tout l'ensemble pivote par rapport à son axe vertical.
